# EUROPÄISCHE PATENTSCHRIFT

(11) **EP 2 539 125 B1**
(45) Veröffentlichungstag und Bekanntmachung des Hinweises auf die Patenterteilung: **19.08.2015**
(21) Anmeldenummer: 11711443.9
(22) Anmeldetag: 28.02.2011
(51) Int. Cl.: B29C 31/00, B65B 59/04

(54) **VERFAHREN ZUM WECHSEL DES OBER- UND UNTERWERKZEUGS EINER VERPACKUNGSMASCHINE**
METHOD FOR CHANGING THE UPPER AND LOWER TOOL OF A PACKAGING MACHINE
PROCÉDÉ DE CHANGEMENT DE L'OUTIL SUPÉRIEUR ET DE L'OUTIL INFÉRIEUR D'UNE MACHINE D'EMBALLAGE

(30) Priorität: 26.02.2010 DE 102010009536
(43) Veröffentlichungstag der Anmeldung: 02.01.2013
(73) Patentinhaber: GEA Food Solutions Germany GmbH, 35216 Biedenkopf-Wallau (DE)
(72) Erfinder: SCHMEISER, Joerg, 87487 Wiggensbach (DE); HUEBNER, Gerd Martin, 57234 Wilnsdorf (DE); MEYER, Klaus, 35236 Breidenbach (DE); NIESAR, Juergen, 57334 Bad Laasphe (DE); RUNTE, Frank, 57334 Bad Laasphe (DE)
(74) Vertreter: Loock, Jan Pieter
(86) Internationale Anmeldenummer: PCT/EP2011/000971
(87) Internationale Veröffentlichungsnummer: WO 2011/104036

(56) Entgegenhaltungen:
- EP-A1- 2 052 979
- DE-U1- 9 107 173

## Beschreibung

Die vorliegende Erfindung betrifft ein Verfahren zum Wechseln des Ober- und Unterwerkzeugs einer Verpackungsmaschine. Desweiteren betrifft die vorliegende Erfindung eine Verpackungsmaschine.

Verpackungsmaschinen, wie sie beispielsweise aus der EP 2 052 979 A1 bekannt sind, werden heutzutage eingesetzt, um Verpackungsgüter, insbesondere Lebensmittel, in eine Verpackungsfolie einzupacken. Diese Verpackungen bestehen in der Regel aus einem Unterteil und einem Oberteil, wobei das Unterteil aus einer Unterfolie und das Oberteil aus einer die Oberfolie hergestellt werden, beispielsweise in einer in passender Form tiefgezogenen Ausformung/Mulde. Das Verpackungsgut befindet sich zwischen der Ober- und der Unterfolie. Nachdem das Verpackungsgut zwischen den beiden Folien angeordnet worden ist, werden diese miteinander versiegelt. Die Folien werden vorzugsweise taktweise entlang der Verpackungsmaschine, mit ihren Funktions-Arbeits-Stationen, transportiert und bei einem Takt werden in der Regel mehrere Verpackungen, ein sogenanntes Format, gleichzeitig hergestellt. Zum Tiefziehen bzw. Siegeln der Folienbahnen werden Werkzeuge benötigt, die in der Regel aus einem Unter- und einem Oberwerkzeug bestehen. Diese Werkzeuge sind für die jeweils herzustellende Verpackung bzw. das jeweils herzustellende Format individualisiert, so dass diese bei einem Verpackungs- bzw. Formatwechsel ausgetauscht werden müssen.

Derartige Werkzeugwechselsysteme werden beispielsweise in der EP 1 234 765 B1 sowie in der EP 2 110 219 A1 sowie in der US 5,940,953 offenbart.

Die dort beschriebenen Werkzeugwechselsysteme sind jedoch vergleichsweise aufwendig bzw. ermöglichen keinen Werkzeugwechsel in ergonomisch günstiger Höhe.

Es war deshalb die Aufgabe der vorliegenden Erfindung, ein Verfahren zur Verfügung zu stellen, das die Nachteile des Standes der Technik nicht aufweisen. Gelöst wird die Aufgabe mit einem Verfahren zum Wechseln des Oberwerkzeugs und/oder des Unterwerkzeugs einer Verpackungsmaschine, bei dem mindestens ein, vorzugsweise beide Werkzeuge über eine Störkante der Verpackungsmaschine angehoben und dann von der Verpackungsmaschine entfernt und neue Werkzeuge oberhalb der Störkante an die Verpackungsmaschine übergeben werden.

Die vorliegende Erfindung betrifft ein Verfahren zum Wechseln der Oberwerkzeuge und/oder der Unterwerkzeuge einer Verpackungsmaschine. Bei diesen Werkzeugen kann es sich um die Werkzeuge einer Tiefziehstation und/oder einer Siegelstation handeln. Die Werkzeuge können aus mehreren Teilen bestehen, die relativ zueinander verschiebbar in der Verpackungsmaschine vorgesehen sein können.

Erfindungsgemäß werden mindestens ein, vorzugsweise die beiden Werkzeuge nun für den Werkzeugwechsel beispielsweise von einem Hubeinrichtung über eine Störkante der Verpackungsmaschine angehoben.

Eine Störkante im Sinne der vorliegenden Erfindung ist eine Höhe, insbesondere oberhalb des Maschinenrahmens, in der ein oder beide Werkzeuge für einen Bediener oder für eine Vorrichtung, beispielsweise einen Roboter und/oder ein Transportmittel, frei verfügbar sind, so dass es/sie aus der Verpackungsmaschine herausgenommen werden können. Das neue Werkzeug wird auch oberhalb dieser Störkante in einen Bereich oberhalb der Verpackungsmaschine verbracht und dann in die Verpackungsmaschine abgesenkt. Die Störkante kann mit der Oberkante des Maschinenrahmens zusammenfallen, liegt jedoch vorzugsweise oberhalb der Oberkante des Maschinenrahmens, insbesondere in einer für den Arbeiter vor Ort ergonomisch günstigen Höhe.

Das Unter- und das Oberwerkzeug der Tiefzieh- bzw. der Siegelstation können gemeinsam oder einzeln gewechselt werden.

Insbesondere wird das jeweilige Werkzeug in einer ergonomisch günstigen Höhe übergeben, so dass die jeweilige Person, die das jeweilige Werkzeug wechselt, dieses, zumindest nicht mehr nennenswert, anheben und/oder absenken, sondern nur noch seitlich verschieben bzw. entnehmen muss.

Vorzugsweise werden die Werkzeuge, insbesondere einer Arbeitsstation, d.h. der Form- oder der Siegelstation, zumindest abschnittsweise gemeinsam, insbesondere mit einem gemeinsamen Antrieb, angehoben oder abgesenkt, wobei natürlicherweise das Oberwerkzeug um eine geringere Wegstrecke angehoben bzw. abgesenkt werden muss als das Unterwerkzeug. Diese bevorzugte Ausführungsform der vorliegenden Erfindung hat den Vorteil, dass lediglich ein Antrieb für beide Werkzeuge beim Werkzeugwechsel benötigt wird. Es sind aber auch mehrere, z.B. zwei oder vier Einzelantriebe je Arbeitsstation möglich, die vorzugsweise elektrisch/elektronisch und/oder mechanisch miteinander gekoppelt sein können.

Die Werkzeuge der Formstation werden vorzugsweise getrennt von den Werkzeugen der Siegelstation gewechselt.

Vorzugsweise werden die oder das Werkzeug(e) senkrecht angehoben bzw. abgesenkt.

Zum Wechseln eines Werkzeuges kann es nötig sein, dass es seitlich verschoben werden muss. Vorzugsweise erfolgt diese seitliche Bewegung in oder gegen die Laufrichtung der Foliebahn. Besonders bevorzugt wird das Werkzeug um mindestens eine Formatlänge (Vorschub der Folienbahn bei einem Takt, auch als Taktlänge bezeichnet), d.h. die Länge, um die die Folie bei einem Takt weitertransportiert wird, seitlich verschoben.

In einer bevorzugten Ausführungsform des erfindungsgemäßen Verfahrens, sind das Unterwerkzeug an einem Hubtisch und das Oberwerkzeug an einem tragenden Oberteil angeordnet. Vorzugsweise wird mindestens ein Werkzeug mit dem Hubtisch bzw. mit dem tragenden Oberteil vor und nach dem Werkzeugwechsel automatisch ent- und/oder verriegelt. Automatisch ent-/verriegelt im Sinne der Erfindung bedeutet, dass eine, vorzugsweise mechanische, Verriegelung, ein Energie-, Vakuum-, Druckluft-, Kühlwasser-, Reinigungsfluid- und/oder Schutzgasanschluss automatisch, d.h. ohne menschliches Zutun, erfolgt. Zusätzliche Montagewerkzeuge sind hiernach für den Werkzeugwechsel nicht erforderlich.

Folienbahn im Sinne der Erfindung bedeutet, dass sie zumindest teilweise aus Kunststoff besteht, aber auch einen Papieranteil oder dergleichen aufweisen kann.

Vorzugsweise wird in der Verpackungsmaschine zumindest eine Folienbahn, insbesondere die Unterfolienbahn, entlang einer Folientransportebene transportiert. Dieser Transport kann kontinuierlich erfolgen. Vorzugsweise erfolgt der Transport jedoch taktweise, wobei die Folienbahn bei jedem Takt um eine Formatlänge weitertransportiert wird. Vorzugsweise handelt es sich bei der Folienbahn um die Unterfolie oder um die Oberfolie. Gemäß einer bevorzugten Ausführungsform wird diese Folienbahn für den Werkzeugwechsel aufgeschnitten, wobei ganz besonders bevorzugt eine Formatlänge aus der Folienbahn oder den Folienbahnen herausgeschnitten wird, so dass das Unterwerkzeug durch diesen Ausschnitt über die Störkante gehoben werden kann. Vorzugsweise erfolgt der Ausschnitt der Folienbahn oder der Folienbahnen so, dass zumindest ein Rand, vorzugsweise beide Ränder der Folienbahn, die von einem Transportmittel, insbesondere zwei Transportketten, die rechts und links von der Folienbahn angeordnet sind, ergriffen ist, stehen gelassen wird/werden, so dass die Folienbahn(en) nach dem Werkzeugwechsel weiter transportiert werden kann/können. Unter den Rändern der Folienbahn versteht der Fachmann den Bereich der Folie, der jeweils rechts und links über das Format hinaussteht. In der Regel wird dieser Bereich jeweils von einer Transportkette ergriffen.

Gemäß einer bevorzugten Ausführungsform weist die Verpackungsmaschine ein tragendes Oberteil auf, mit dem das zu wechselnde Oberwerkzeug verbunden wird. Vorzugsweise ist dieses tragende Oberteil für den Werkzeugwechsel von dem zu wechselnden Werkzeug wegbewegbar, insbesondere wegschwenkbar, wegdrehbar, wegschiebbar und/oder zumindest abschnittsweise translatorisch bewegbar, vorgesehen. Diese bevorzugte Ausführungsform der vorliegenden Erfindung hat den Vorteil, dass durch diese Wegbewegung das zu wechselnde Oberwerkzeug frei von oben zugänglich ist. Diese Wegbewegung des Werkzeuges kann gemäß einer weiteren bevorzugten oder erfindungsgemäßen Ausführungsform der vorliegenden Erfindung auch für eine Werkzeuginspektion und/oder eine Werkzeugreinigung eingesetzt werden.

Gemäß einer anderen bevorzugten Ausführungsform der vorliegenden Erfindung werden bei einem Wechsel des Vorschubs der Folienbahn bei einem Takt (Taktlänge) nur die Werkzeuge gewechselt. Die Position der Form- und/oder Siegelstation innerhalb der Verpackungsmaschine bleibt vorzugsweise unverändert kann aber noch zusätzlich angepasst werden. Dabei werden die Werkzeuge in ihrer Grundstruktur vorzugsweise auf eine große Vorschublänge ausgelegt und, bei kleineren Formaten, lediglich der Wirkbereich der Werkzeuge, der im Eingriff mit der jeweiligen Folienbahn steht, reduziert.

Gemäß einer anderen bevorzugten Ausführungsform der vorliegenden Erfindung wird bei einem Wechsel des Vorschubs der Folienbahn bei einem Takt (Taktlänge) die Gesamtlänge des Werkzeuges an den jeweilig gewünschten Vorschub angepasst. In diesem Fall muss neben dem Werkzeug selbst auch die Grundplatte, die das Werkzeug mit dem Hubsystem verbindet, ausgetauscht werden. Vorzugsweise wird dabei die Grundplatte ebenfalls über die Störkante gehoben, und/oder nach dem Werkzeugwechsel zumindest abschnittsweise wieder unter die Störkante abgesenkt und/oder es wird die Grundplatte vor und nach dem Werkzeugwechsel automatisch ent- und/oder verriegelt.

Vorzugsweise wird bei einem Werkzeugwechsel auch die Position der jeweiligen Arbeitsstation innerhalb der Verpackungsmaschine angepasst. Dies kann vor, bei oder nach dem Werkzeugwechsel erfolgen. Die Position der jeweiligen Arbeitsstation (z.B. Form-, Füll-, Siegel- und/oder Vereinzelungsstation) kann dabei beispielsweise an einen veränderten Vorschub der Folienbahn je Takt angepasst werden. Die Arbeitsstationen werden bei einer Veränderung ihrer Position vorzugsweise entlang des Rahmens der Verpackungsmaschine verschoben und dann in ihrer neuen Position arretiert. Das Verschieben kann manuell oder motorisch, insbesondere automatisch erfolgen, insbesondere anhand einer am Werkzeug vorhandenen Kennung.

In einer weiteren bevorzugten Ausführungsform ist das jeweilige Werkzeug mit einem Identifizierungsmittel/Kennung, beispielsweise mit RFID, identifizierbar. Diese bevorzugte Ausführungsform hat beispielsweise den Vorteil, dass die Verpackungsmaschine, nachdem das jeweilige Werkzeug identifiziert worden ist, automatisch an das jeweilige Werkzeug anpassbar ist. Beispielsweise kann mittels der Identifizierung festgelegt werden, welche Anschlüsse (Energie, Druckluft, Inertgas etc.) vorgesehen werden müssen. Desweiteren kann die Bewegung des Werkzeuges, d.h. insbesondere die Bewegung des Hubtisches, an das jeweilige Werkzeug angepasst werden, um zu vermeiden, dass die Verpackungsmaschine durch einen zu großen Hub beschädigt wird oder dass der Werkzeughub zu gering ist. Zusätzlich kann anhand der Kennung festgelegt werden wie der Werkzeugwechsel erfolgen soll, beispielsweise auf welche Höhe das jeweilige Werkzeug gehoben werden soll. Auch ein Transportmittel, das das Werkzeug nach dem Wechsel übernimmt, kann anhand der Kennung automatisch gesteuert werden. Außerdem kann mit dem Identifizierungsmittel verhindert werden, dass ein falsches, nicht für die jeweilige Verpackungsmaschine vorgesehenes Werkzeug, eingesetzt wird. In diesem Fall wird eine in der Verpackungsmaschine vorgesehene Steuerung vorzugsweise verhindern, dass die Verpackungsmaschine in Betrieb gesetzt werden kann. Dasselbe gilt vorzugsweise, wenn die Steuerung erkennt, dass nicht aufeinander abgestimmte Werkzeuge in einer der Arbeitsstationen, vorzugsweise in der Tiefzieh- und/oder Siegelstation, eingespannt sind.

Im Folgenden werden die Erfindungen anhand der Figuren 1 bis 7 erläutert. Diese Erläuterungen sind lediglich beispielhaft und schränken den allgemeinen Erfindungsgedanken nicht ein. Diese Erläuterungen gelten für alle Gegenstände der vorliegenden Erfindungen gleichermaßen.
Figur 1 zeigt eine Verpackungsmaschine.
Figur 2 zeigt eine erste Ausführungsform des erfindungsgemäßen Verfahrens.
Figur 3 zeigt eine weitere Ausführung des erfindungsgemäßen Verfahrens.
Figur 4 zeigt eine dritte Ausführungsform des erfindungsgemäßen Verfahrens.
Figur 5 zeigt noch eine weitere Ausführungsform des erfindungsgemäßen Verfahrens.
Figur 6 zeigt die Verpackungsmaschine mit dem tragenden Oberteil im geschlossenen Zustand.
Figur 7 zeigt die Ausführungsform gemäß Figur 6 mit hochgeschwenktem schwenkbaren Teil, ohne dass das tragende Oberteil daran angedockt ist.

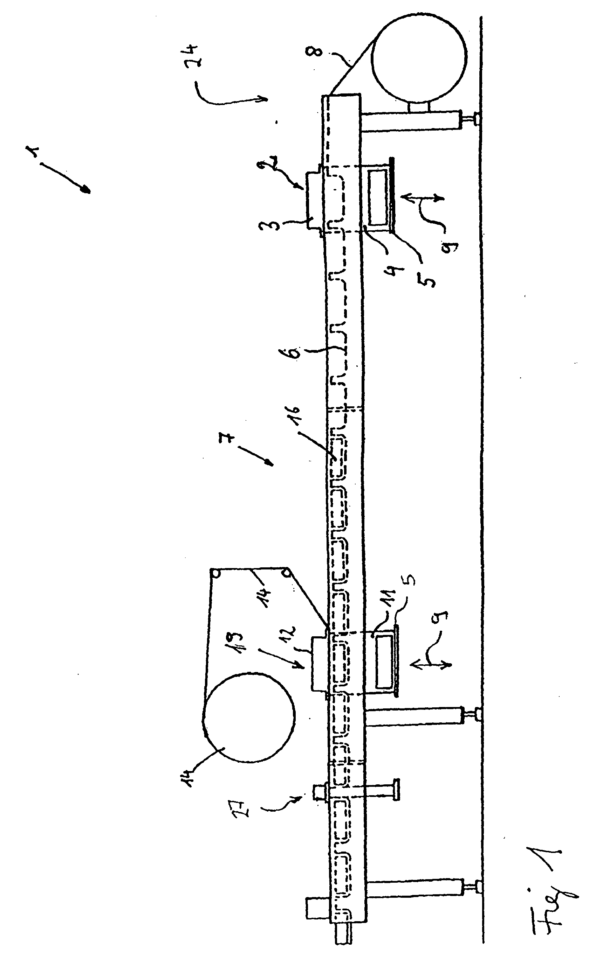

Figur 1 zeigt die erfindungsgemäße Verpackungsmaschine 1, die eine Tiefziehstation 2, eine Füllstation 7 sowie eine Siegelstation 19 aufweist. Eine Kunststofffolienbahn 8, die sogenannte Unterbahn, wird von einer Vorratsrolle abgezogen und, vorzugsweise taktweise, entlang der erfindungsgemäßen Verpackungsmaschine von rechts nach links transportiert. Bei einem Takt wird die Folienbahn um eine Formatlänge weitertransportiert. In der Anmeldung wird dies auch als "Vorschubs der Folienbahn bei einem Takt" bezeichnet. Dafür weist die Verpackungsmaschine zwei Transportmittel (nicht dargestellt), in dem vorliegenden Fall jeweils zwei Endlosketten auf, die rechts und links von der Folienbahn angeordnet sind. Jede Endloskette weist Haltemittel auf, die jeweils die Kanten der Folienbahn zusammenwirken. Sowohl am Anfang als auch am Ende der Verpackungsmaschine ist für jede Kette jeweils mindestens ein Zahnrad vorgesehen, um das die jeweilige Kette umgelenkt wird. Mindestens eines dieser Zahnräder ist angetrieben. Die Zahnräder im Eingangsbereich und/oder im Ausgangsbereich können miteinander, vorzugsweise durch eine starre Achse, verbunden sein. Jedes Transportmittel weist eine Vielzahl von Klemmmitteln auf, die die Unterfolie im Einlaufbereich klemmend ergreifen und die Bewegung des Transportmittels auf die Unterfolie übertragen. Im Auslaufbereich der Verpackungsmaschine wird die klemmende Verbindung zwischen dem Transportmittel und der Unterfolie wieder gelöst. In der Tiefziehstation 2, die über ein Oberwerkzeug 3 und ein Unterwerkzeug 4 verfügt, das die Form der herzustellenden Verpackungsmulde aufweist, werden die Verpackungsmulden 6 in die Folienbahn 8 eingeformt. Das Unterwerkzeug 4 ist auf einem Hubtisch 5 angeordnet, der, wie durch den Doppelpfeil symbolisiert wird, vertikal verstellbar ist. Vor jedem Folienvorschub wird das Unterwerkzeug 4 abgesenkt und danach wieder angehoben. Im weiteren Verlauf der Verpackungsmaschine werden die Verpackungsmulden dann in der Füllstation 7 mit dem Verpackungsgut 16 gefüllt. In der sich daran anschließenden Siegelstation 19, die ebenfalls aus einem Oberwerkzeug 12 und einem vertikal verstellbaren Unterwerkzeug 11 besteht, wird eine Oberfolie auf die Verpackungsmulde gesiegelt. Auch in der Siegelstation werden das Oberwerkzeug und/oder das Unterwerkzeug vor und nach jedem Folientransport abgesenkt bzw. angehoben. Auch die Oberfolie 14 kann in Transportmitteln geführt sein bzw. von Transportketten transportiert werden, wobei sich diese Transportmittel dann nur von der Siegelstation und ggf. stromabwärts erstrecken. Ansonsten gelten die Ausführungen, die zu dem Transportmitteln der Unterfolie gemacht wurden. Im weiteren Verlauf der Verpackungsmaschine werden auch die fertiggestellten Verpackungen vereinzelt, was mit dem Schneidwerkzeug 27 erfolgt.

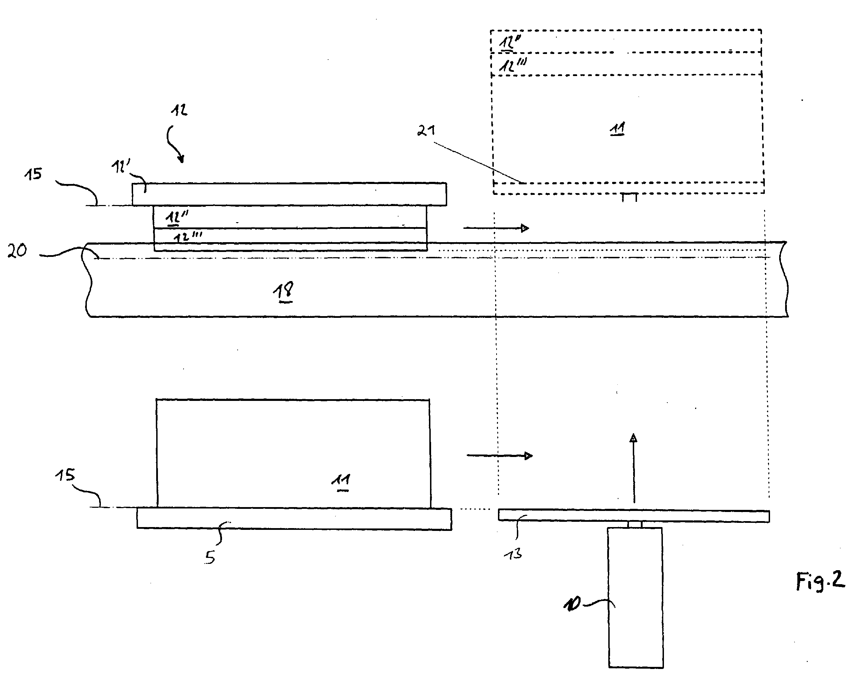

Figur 2 zeigt die Siegelstation der erfindungsgemäßen Verpackungsvorrichtung, wobei die folgenden Ausführungen gemäß Figur 2 bis 7 für die Tiefziehstation analog gelten. Zu sehen ist ein Maschinenrahmen 18 entlang dessen von rechts nach links oder von links nach rechts befüllte Verpackungen in einer Folienebene 20 transportiert werden, die in der Siegelstation mit einer Oberfolie verschlossen werden. Die Siegelstation weist ein Oberwerkzeug 12 und ein Unterwerkzeug 11 auf. Das Oberwerkzeug 12 besteht aus einem tragenden Oberteil 12' an dem ein Siegelrahmen 12" sowie ein Kammerdeckel 12"' angeordnet ist. Vorzugsweise ist der Siegelrahmen 12" relativ zu dem Kammerdeckel beweglich vorgesehen. Der Siegelrahmen 12" und der Kammerdeckel 12"' werden im Folgenden als Werkzeuge bezeichnet, die von dem tragenden Oberteil 12' entlang einer Trennebene 15 getrennt werden und somit ausgetauscht werden können. Unterhalb der Folienebene ist ein Siegelunterteil 11 vorgesehen, das beispielsweise eine Siegelbrille aufweist. Dieses Werkzeug 11 ist an einem Hubtisch 5, mit dem es auf und ab bewegbar ist, fixiert, kann jedoch von diesem auch entlang der Trennebene 15 getrennt und somit ausgetauscht werden. Für ein Werkzeugwechsel werden die zu wechselnden Werkzeuge 12", 12'" und 11 zunächst einmal in ihre Werkzeugwechselposition verbracht. Sodann werden die Werkzeuge 12", 12'" als Einheit von dem tragenden Oberteil 12' getrennt. Dies erfolgt manuell, vorzugsweise jedoch automatisch. Danach wird das Werkzeug 12", 12'" auf eine Aufnahmeeinheit, beispielsweise Schiebeleiste, verbracht, vorzugsweise abgesenkt, entweder durch freien Fall über eine kurze Entfernung oder automatisch geführt. Des Weiteren wird die Folie im Bereich oberhalb einer Hubeinrichtung 10 geöffnet, beispielsweise indem mit einem Messer ein Loch in die Folienbahn geschnitten wird, das so groß ist, dass das untere Werkzeug durch dieses Loch hindurch geführt werden kann. Bereiche der Folie (seitliche Streifen) bleiben dabei unbeschädigt, so dass die Folie bereichsweise durchgängig bleibt und der Kraftfluss beim Transport der Folie nicht vollständig unterbrochen wird. Dadurch entfällt ein erneutes Einfädeln der Folie im anschließenden Prozessverlauf. Des Weiteren wird das untere Werkzeug 11 entweder manuell oder automatisch von dem Hubtisch 5 entriegelt. Sodann werden das untere Werkzeug 11 gegen oder in Laufrichtung der Maschine um mindestens eine Formatlänge entweder manuell oder automatisch verschoben, wobei das Werkzeug 11 auf ein Übernahmesystem übergeben wird, das Bestandteil der bestehenden Hubeinrichtung sein kann, jedoch auch eine separate Hubeinrichtung 10 darstellen kann. Auch das obere Werkzeug 12", 12'" wird in oder gegen die Laufrichtung der Maschine verschoben, wobei die Werkzeuge 12", 12"' sowie 11 vorzugsweise in dieselbe Richtung verschoben werden. Auch dieses Werkzeug 12", 12'" wird um mindestens eine Formatlänge der Folie entweder manuell oder automatisch verschoben und das Werkzeug 12", 12'" auf ein Übernahmesystem vorzugsweise dasselbe Übernahmesystem wie das Unterwerkzeug 11 übergeben. Vorzugsweise bewegungskombiniert werden sodann das untere Werkzeug 11 sowie das obere Werkzeug 12", 12'" über die Störkante, das heißt mindestens über den Maschinenrahmen 18 der Verpackungsmaschine, angehoben und können von dort in einer ergonomischen Höhe von Hand oder von einem Maschinensystem übernommen werden.

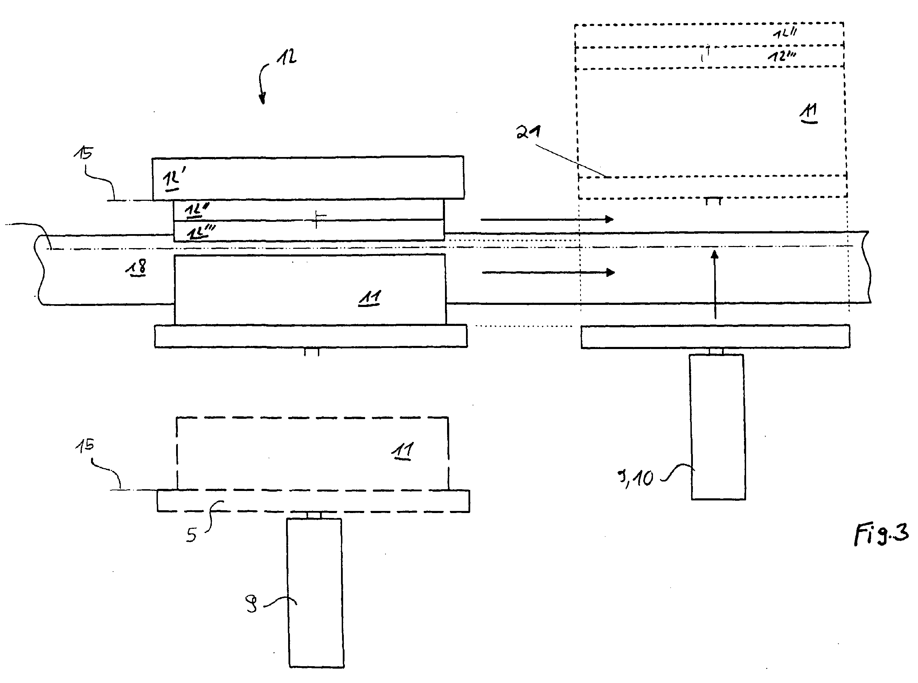

Figur 3 zeigt eine weitere Ausführungsform des erfindungsgemäßen Verfahrens. Die Ausführungen zu den Figuren 1 und 2 gelten für das Verfahren gemäß Figur 3 gleichermaßen, wobei in dem vorliegenden Fall die beiden Werkzeuge gemeinsam von der Hubeinrichtung 10 angehoben werden. Die Hubeinrichtung kann die ohnehin vorhandene Hubeinrichtung oder eine zusätzliches Hubeinrichtung sein. Sofern Produktunterstützungen (nicht dargestellt) vorhanden sind, müssen diese entfernt oder in die zusätzliche Hubeinrichtung 10 integriert werden. Vor dem gemeinsamen Anheben mit der Hubeinrichtung 10 kann das Unterwerkzeug 11 in eine, in diesem Fall erhöhte Werkzeugwechselposition nahe unter der Unterfolie mit der zumeist vorhandenen Hubeinrichtung 9 verbracht werden, um beispielsweise die Hubeinrichtung 10, durch die erhöhte Angriffsposition mit einem geringeren Hubmaß ausstatten zu können, wodurch beispielsweise der Bauraum reduziert und Material eingespart werden können.

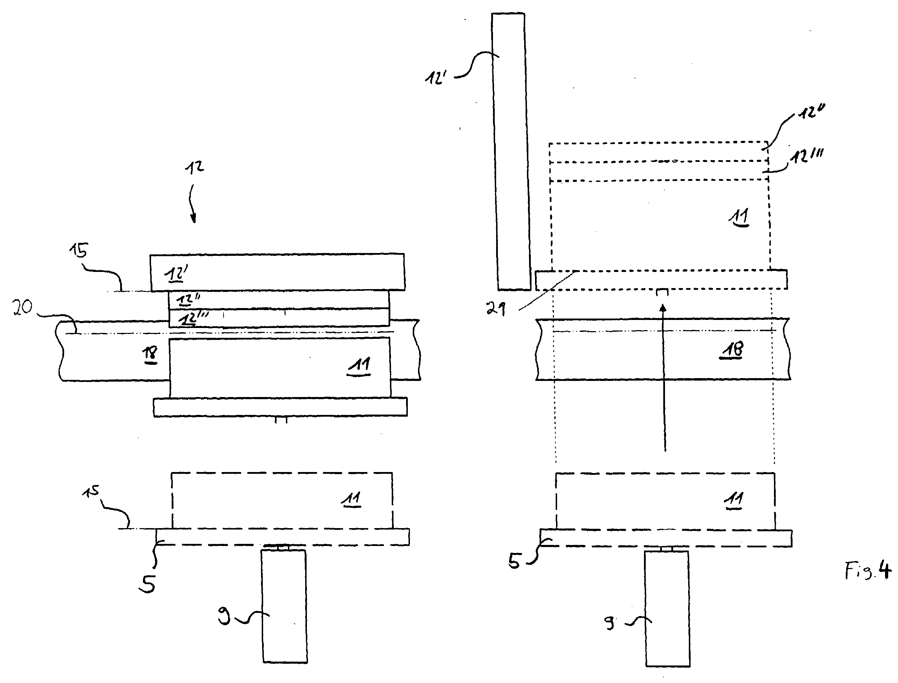

Figur 4 zeigt eine weitere Variante des erfindungsgemäßen Verfahrens. Auch bei dieser Variante wird auf die vorherigen Verfahrensbeschreibungen gemäß Figuren 1 - 3 Bezug genommen. Diese Variante weist als Besonderheit auf, dass die Hubeinrichtung 9, die für die Auf und Ab-Bewegung beim Siegeln der Folie benötigt wird, auch zum Werkzeugwechsel eingesetzt wird. Mit dieser Hubeinrichtung 9 wird mindestens das Unterwerkzeug 11 vorzugsweise jedoch das Unterwerkzeug 11 und das Oberwerkzeug 12", 12'" gemeinsam über die Störkante 21 hinaus angehoben. Des Weiteren weist diese Ausführungsform der erfindungsgemäßen Vorrichtung bzw. des erfindungsgemäßen Verfahrens ein schwenkbares, tragendes Oberteil 12' auf, das von einer im Wesentlichen horizontalen in eine im Wesentlichen vertikale Ausrichtung verschwenkbar ist. Dadurch ist der Bereich oberhalb des Werkzeugs 12" bzw. 12'" vollständig frei. Alternativ kann das tragende Oberteil 12' zusätzlich oder ausschließlich seitlich verschoben werden, um den Bereich oberhalb des Werkzeugs 12" und 12'" freizugeben.

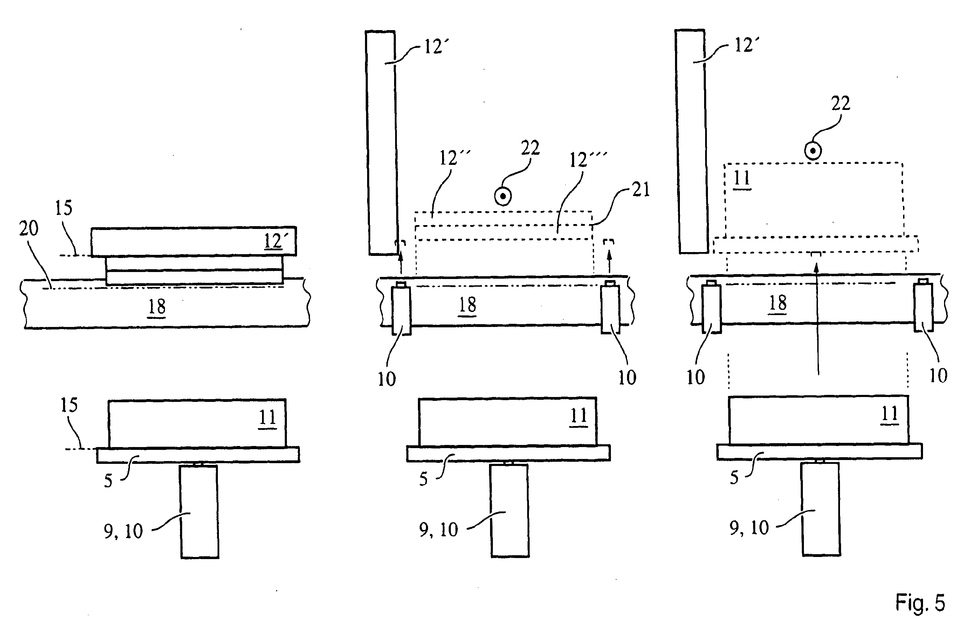

Figur 5 zeigt noch eine weitere Ausführungsform des erfindungsgemäßen Verfahrens, wobei auch hier auf die Beschreibung gemäß den voranstehenden Figuren Bezug genommen wird. Auch bei dieser Version ist das tragende Oberteil 12' für einen Werkzeugwechsel von einer horizontalen in eine vertikale Position überführbar und/oder seitlich verschiebbar. Bei dieser Variante wird zunächst das Oberwerkzeug 12", 12'" angehoben und horizontal, wie durch den Pfeil 22 symbolisiert, von der Maschine, durch eine horizontale Bewegung etwa quer zur Transportrichtung der Folie, entnommen. Sodann wird das untere Werkzeug 11 über eine Störkante 21 angehoben und kann ebenfalls, wie durch den Pfeil 22 symbolisiert, horizontal nach vorne verschoben werden. Für die Bewegung des Oberwerkzeuges 12", 12'" weist die erfindungsgemäße Verpackungsmaschine zwei zusätzliche Hubeinrichtungen 10 auf. Die Bewegung des Unterwerkzeugs 11 kann entweder mit der sowieso vorhandenen Hubeinrichtung 9 oder mit einer zusätzlichen Hubeinrichtung 10 erfolgen.

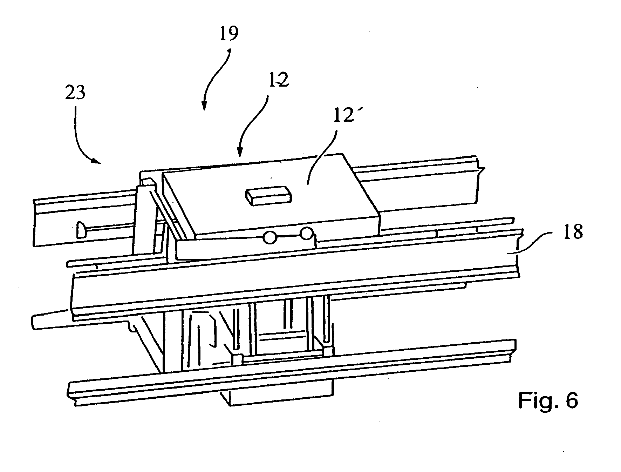

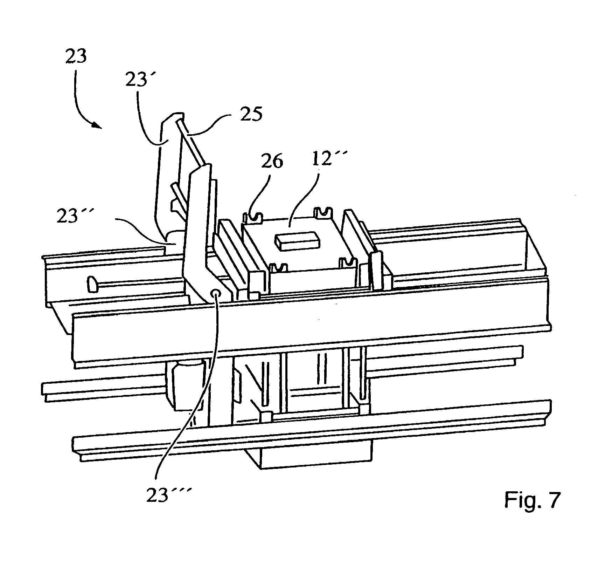

Figur 6 zeigt eine Ausführungsform der erfindungsgemäßen Verpackungsmaschine, bei der das tragende Oberteil 12' mit einem Schwenkmechanismus 23 von einer horizontalen in eine vertikale Stellung überführt werden kann. Wie insbesondere Figur 7 entnommen werden kann, weist der Schwenkmechanismus 23 ein schwenkbares Teil 23', ein stationär an den Maschinenrahmen 18 vorgesehenes Teil 23" sowie ein Drehgelenk 23'" auf. Das schwenkbare Teil 23' weist Verbindungsmittel 25 hier Stangen auf, die lösbar mit dem tragenden Oberteil 12' verbindbar sind. Ebenso weist das tragende Oberteil 12" Verbindungsmittel 26 auf, die das Ankoppeln des schwenkbaren Teils 23'an deren Verbindungsmittel 25 ermöglichen.

In Figur 7 ist das schwenkbare Teil 23' hochgeschwenkt dargestellt, ohne dass das tragende Oberteil 12' angekoppelt ist. Wäre das tragende Oberteil 12' hingegen angekoppelt, dann würde es mit hochgeschwenkt und somit der Bereich oberhalb des Werkzeugs 12" bzw. 12'" frei zugänglich. Die zusätzliche oder ausschließliche Ausführung, in der das tragende Oberteil seitlich weggeschoben werden kann, um den Bereich oberhalb des Werkzeugs 12" bzw. 12'" frei zugänglich zu machen, ist nicht bildlich dargestellt.

### Bezugszeichenliste:

- 1: Verpackungsmaschine
- 2: Tiefziehstation
- 3: Oberwerkzeug der Tiefziehstation
- 4: Unterwerkzeug der Tiefziehstation
- 5: Hubtisch, Träger der Siegel- und/oder Tiefziehstation, Grundplatte auf dem das Unterwerkzeug befestigt ist
- 6: Verpackungsmulde
- 7: Füllstation
- 8: Unterfolienbahn
- 9: Hubeinrichtung für die Verpackungsherstellung und/oder den Werkzeugwechsel
- 10: Hubeinrichtung für den Werkzeugwechsel
- 11: Unterwerkzeug der Siegelstation
- 12: Oberwerkzeug der Siegelstation
- 12': tragendes Oberteil, tragendes Siegeloberteil
- 12": weiteres Oberteil, Siegelahmen
- 12'": weiteres Oberteil, Kammerdeckel
- 13: Hubtisch, Träger des Werkzeugwechselsystems
- 14: Oberfolie
- 15: Trennebene
- 16: Verpackungsgut
- 17: Steuerelement, Steuerrolle
- 18: Maschinenrahmen
- 19: Siegelstation
- 20: Folienebene
- 21: untere Störkante
- 22: horizontal
- 23: Schwenk-, Drehmechanismus
- 23': schwenkbares Teil
- 23": feststehendes Teil
- 23'": Drehgelenk
- 24: Einlaufbereich
- 25: Verbindungsmittel
- 26: Verbindungsmittel
- 27: Schneideinrichtung

## Patentansprüche

1. Verfahren zum Wechseln des Oberwerkzeugs (3, 12", 12"') und/oder Unterwerkzeugs (4, 11) einer Verpackungsmaschine (1), **dadurch gekennzeichnet, dass** beide, Werkzeuge (3, 4, 11, 12", 12"') mit einer Hubeinrichtung über eine Störkante (21) der Verpackungsmaschine angehoben und dann von der Verpackungsmaschine (1) entfernt und neue Werkzeuge (3, 4, 11, 12", 12"') oberhalb der Störkante (21) an die Verpackungsmaschine übergeben werden.

2. Verfahren nach Anspruch 1, **dadurch gekennzeichnet, dass** das Unterwerkzeug (4, 11) und/oder Oberwerkzeug (3, 12", 12"') nach der Übergabe teilweise oder vollständig unter die Störkante (21) abgesenkt wird.

3. Verfahren nach Anspruch 1 oder 2, **dadurch gekennzeichnet, dass** die Werkzeuge (3, 4, 11, 12", 12'") der Siegel- und/oder Formstation jeweils zumindest abschnittsweise gemeinsam, insbesondere mit mindestens einem, vorzugsweise mehreren, ganz besonders bevorzugt zwei oder vier gemeinsamen Antrieben, angehoben und/oder abgesenkt werden.

4. Verfahren nach einem der voranstehenden Ansprüche, **dadurch gekennzeichnet, dass** das Unterwerkzeug (4, 11) an einem Hubtisch (5) und das Oberwerkzeug (12", 12"', 3) an einem tragenden Oberteil (12') angeordnet ist und dass mindestens ein Werkzeug (3, 4, 11, 12", 12"') mit dem Hubtisch (5) bzw. mit dem tragenden Oberteil (12') vor und nach dem Werkzeugwechsel automatisch ent- und/oder verriegelt werden.

5. Verfahren nach einem der voranstehenden Ansprüche, **dadurch gekennzeichnet, dass** in der Verpackungsmaschine (1) zumindest eine Folienbahn (8, 14) transportiert wird und dass mindestens eine Folienbahn (8, 14) für den Werkzeugwechsel geöffnet, vorzugsweise aufgeschnitten, wird.

6. Verfahren nach einem der voranstehenden Ansprüche, **dadurch gekennzeichnet, dass** das tragende Oberteil (12) für den Werkzeugwechsel von dem Oberwerkzeug (3, 12", 12"') wegbewegt, insbesondere seitlich, längs- und/oder quer zur Folientransportrichtung manuell oder motorisch zumindest abschnittsweise translatorisch bewegt wird.

7. Verfahren nach einem der voranstehenden Ansprüche, **dadurch gekennzeichnet, dass** das tragende Oberteil (12') für den Werkzeugwechsel von dem Werkzeug (3, 12", 12"') wegbewegt, insbesondere weggeschwenkt, wird.

8. Verfahren nach einem der voranstehenden Ansprüche, **dadurch gekennzeichnet, dass** nur die Werkzeuge (3, 4, 11, 12", 12"') bei einem Wechsel des Vorschubs der Folienbahn bei einem Takt gewechselt werden, vorzugsweise ohne dass die Position der Form- und/oder Siegelstation innerhalb der Verpackungsmaschine verändert werden.

9. Verfahren nach einem der Ansprüche 1 - 7, **dadurch gekennzeichnet, dass**, vorzugsweise bei einem Wechsel des Vorschubs der Folienbahn bei einem Takt, die Werkzeuge (3, 4, 11, 12", 12'") und die Grundplatten (5) gewechselt werden.

10. Verfahren nach Anspruch 9, **dadurch gekennzeichnet, dass** die Grundplatte (5) ebenfalls über die Störkante gehoben wird, und/oder nach dem Werkzeugwechsel zumindest abschnittsweise wieder unter die Störkante abgesenkt wird und/oder vor und nach dem Werkzeugwechsel automatisch ent- und/oder verriegelt wird.

11. Verfahren nach einem der voranstehenden Ansprüche, **dadurch gekennzeichnet, dass** bei einem Werkzeugwechsel auch die Position der jeweiligen Station entlang der Verpackungsmaschine geändert wird.

12. Verfahren nach einem der voranstehenden Ansprüche, **dadurch gekennzeichnet, dass** das Werkzeug (3, 4, 11, 12", 12'") mit RFID identifiziert wird.

13. Verfahren nach einem der voranstehenden Ansprüche, **dadurch gekennzeichnet, dass** das Unterwerkzeug (4, 11) durch ein Loch in der Folie gehoben und abgesenkt wird.

14. Verfahren nach einem der voranstehenden Ansprüche, **dadurch gekennzeichnet, dass** der Werkzeugwechsel ohne zusätzliches Montagewerkzeug erfolgt.

## Claims

1. Method for changing the upper tool (3, 12", 12''') and/or lower tool (4, 11) of a packaging machine (1), **characterized in that** both tools (3, 4, 11, 12", 12''') are raised with a lifting device over a disturbing edge (21) of the packaging machine and then removed from the packaging machine (1), and new tools (3, 4, 11, 12", 12''') are delivered above the disturbing edge (21) to the packaging machine.

2. Method according to Claim 1, **characterized in that** the lower tool (4, 11) and/or upper tool (3, 12", 12'''), after the delivery, is lowered in part or in full to below the disturbing edge (21).

3. Method according to Claim 1 or 2, **characterized in that** the tools (3, 4, 11, 12", 12"') of the sealing and/or forming station are respectively raised and/or lowered, at least in sections, jointly, in particular with at least one, preferably a plurality of, quite particularly two or four common drives.

4. Method according to one of the preceding claims, **characterized in that** the lower tool (4, 11) is disposed on a lifting table (5) and the upper tool (12", 12"', 3) is disposed on a supporting top part (12'), and **in that** at least one tool (3, 4, 11, 12", 12''') is automatically unlocked from and/or locked to the lifting table (5) or from/to the supporting top part (12') before and after the tool change.

5. Method according to one of the preceding claims, **characterized in that** in the packaging machine (1) at least one film web (8, 14), in particular the lower film web, is transported, and **in that** at least one film web (8, 14) is opened, preferably cut open, for the tool change.

6. Method according to one of the preceding claims, **characterized in that** the supporting top part (12), for the tool change, is moved away from the upper tool (3, 12", 12"'), in particular is moved laterally, longitudinally and/or transversely to the film transport direction manually or by motor, at least in sections, translationally.

7. Method according to one of the preceding claims, **characterized in that** the supporting top part (12'), for the tool change, is moved away, in particular swung away, from the tool (3, 12'', 12"').

8. Method according to one of the preceding claims, **characterized in that**, in the event of a change in feed of the film web in a cycle, preferably only the tools (3, 4, 11, 12'', 12''') are changed.

9. Method according to one of Claims 1-7, **characterized in that**, in the event of a change in feed of the film web in a cycle, the tools (3, 4, 11, 12", 12''') and the base plate (5) are changed.

10. Method according to Claim 9, **characterized in that** the base plate (5) is likewise lifted over the disturbing edge, and/or, after the tool change, is lowered at least in sections to back below the disturbing edge, and/or, before and after the tool change, is automatically unlocked and/or locked.

11. Method according to one of the preceding claims, **characterized in that**, in the event of a tool change, the position of the respective station along the packaging machine is also altered.

12. Method according to one of the preceding claims, **characterized in that** the tool (3, 4, 11, 12" , 12''') is identified with RFID.

13. Method according to one of the preceding claims, **characterized in that** the lower tool (4, 11) is lifted and lowered through a hole in the film.

14. Method according to one of the preceding claims, **characterized in that** the tool change is realized without any additional assembly tool.

## Revendications

1. Procédé de changement de l'outil supérieur (3, 12'', 12''') et/ou de l'outil inférieur (4, 11) d'une machine d'emballage (1), **caractérisé en ce que** les deux outils (3, 4, 11, 12'', 12"') sont soulevés avec un dispositif de levage au-dessus d'une arête gênante (21) de la machine d'emballage puis sont enlevés de la machine d'emballage (1) et de nouveaux outils (3, 4, 11, 12", 12"') sont transférés au-dessus de l'arête gênante (21) à la machine d'emballage.

2. Procédé selon la revendication 1, **caractérisé en ce que** l'outil inférieur (4, 11) et/ou l'outil supérieur (3, 12", 12"') sont partiellement ou complètement abaissés en dessous de l'arête gênante (21) après le transfert.

3. Procédé selon la revendication 1 ou 2, **caractérisé en ce que** les outils (3, 4, 11, 12", 12''') du poste de scellage et/ou de formage sont soulevés et/ou abaissés, à chaque fois au moins partiellement en commun, en particulier avec au moins un, de préférence plusieurs, tout particulièrement préférablement deux ou quatre entraînements communs.

4. Procédé selon l'une quelconque des revendications précédentes, **caractérisé en ce que** l'outil inférieur (4, 11) est disposé au niveau d'une table de levage (5) et l'outil supérieur (12'', 12''', 3) est disposé au niveau d'une partie supérieure portante (12') et **en ce qu'**au moins un outil (3, 4, 11, 12'', 12''') est déverrouillé et/ou verrouillé automatiquement avec la table de levage (5) ou avec la partie supérieure portante (12') avant et après le changement d'outil.

5. Procédé selon l'une quelconque des revendications précédentes, **caractérisé en ce que** dans la machine d'emballage (1) est transportée au moins une bande de film (8, 14) et **en ce qu'**au moins une bande de film (8, 14) est ouverte, de préférence par découpage, pour le changement d'outil.

6. Procédé selon l'une quelconque des revendications précédentes, **caractérisé en ce que** la partie supérieure portante (12), pour le changement d'outil, est déplacée à l'écart de l'outil supérieur (3, 12'', 12'''), en particulier est déplacée au moins en partie par translation latéralement, longitudinalement et/ou transversalement à la direction de transport de film, manuellement ou par moteur.

7. Procédé selon l'une quelconque des revendications précédentes, **caractérisé en ce que** la partie supérieure portante (12'), pour le changement d'outil, est déplacée à l'écart de l'outil (3, 12'', 12"'), notamment est écartée par pivotement.

8. Procédé selon l'une quelconque des revendications précédentes, **caractérisé en ce que** seuls les outils (3, 4, 11, 12", 12'''), lors d'un changement de l'avance de la bande de film, sont changés lors d'un cycle, de préférence sans que la position du poste de formage et/ou de scellage à l'intérieur de la machine d'emballage ne soit modifiée.

9. Procédé selon l'une quelconque des revendications 1 à 7, **caractérisé en ce que** de préférence lors d'un changement de l'avance de la bande de film, lors d'un cycle, les outils (3, 4, 11, 12'', 12''') et la plaque de base (5) sont changés.

10. Procédé selon la revendication 9, **caractérisé en ce que** la plaque de base (5) est également soulevée au-dessus de l'arête gênante, et/ou après le changement d'outil, est à nouveau abaissée au moins en partie sous l'arête gênante et/ou avant et après le changement d'outil, est déverrouillée et/ou verrouillée automatiquement.

11. Procédé selon l'une quelconque des revendications précédentes, **caractérisé en ce que** dans le cas d'un changement d'outil, la position du poste respectif le long de la machine d'emballage est également modifiée.

12. Procédé selon l'une quelconque des revendications précédentes, **caractérisé en ce que** l'outil (3, 4, 11, 12'', 12''') est identifié par RFID.

13. Procédé selon l'une quelconque des revendications précédentes, **caractérisé en ce que** l'outil inférieur (4, 11) est soulevé et abaissé à travers un trou dans le film.

14. Procédé selon l'une quelconque des revendications précédentes, **caractérisé en ce que** le changement d'outil s'effectue sans outil de montage supplémentaire.
